# EUROPEAN PATENT SPECIFICATION

(11) **EP 4 240 148 B1**
(45) Date of publication and mention of the grant of the patent: **12.11.2025**
(21) Application number: 21801521.2
(22) Date of filing: 27.10.2021
(51) Int. Cl.: A01M 7/00

(54) **METHOD FOR LOW VOLUME SPRAY APPLICATION**
VERFAHREN ZUM VERSPRÜHEN VON NIEDRIGEN VOLUMINA
PROCÉDÉ DE PULVÉRISATION À FAIBLE VOLUME

(30) Priority: 07.11.2020 EP 20206325
(43) Date of publication of application: 13.09.2023
(73) Proprietor: Bayer Aktiengesellschaft, 51373 Leverkusen (DE)
(72) Inventor: FAERS, Malcolm, 40597 Düsseldorf (DE); CHAPPLE, Charles, Andrew, 40764 Langenfeld (DE)
(74) Representative: BIP Patents
(86) International application number: PCT/EP2021/079859
(87) International publication number: WO 2022/096344

(56) References cited:
- US-A1- 2020 154 630

## Description

### FIELD OF THE INVENTION

The present invention relates to a method for low volume spray application and to a vehicle that can carry out that method.

### BACKGROUND OF THE INVENTION

The general background of this invention is a method for low volume spray application with a vehicle such as an Unmanned Aerial Vehicle (UAV) in particular in the field of agriculture.

US 2020/154630 A1 discloses methods to reduce bag rupture in an agricultural spray dispensed from a nozzle with a drift reduction adjuvant composition.

For many crop protection chemical and biological products for spray application a good coverage of the target crop is important to have good control of diseases, pests and weeds. This is commonly achieved by the spray application of high volumes of water, typically >100 to 5000 l/ha, depending on the leaf canopy size. With these high volumes of water, good coverage of the target crop is usually achieved. At the same time it is important to reduce off-target spray to areas adjacent to the target field by drift, which is commonly caused by fine droplets, especially those <100 microns diameter. At high spray volumes, this can be solved by the use of coarse or low drift spray nozzles without affecting the coverage on the crop since the coverage on the crop is achieved by the high volumes of water. However, at low spray volumes - typically <100 l/ha - this does not hold true since there is no longer a sufficient volume of water to cover the crop leaf surface and the coverage on the crop decreases markedly as the spray volume is decreased. This is especially true in the case of UAV spray application where spray volumes equal to or less than 20 l/ha are common. This can be partially compensated by the use of a fine spray where a greater number of spray droplets are produced giving a higher number of spray deposits per leaf than with a coarse spray. However, this has the disadvantage that a high number of driftable spray droplets <100 microns are produced, resulting in high drift. Conversely, if a coarse spray is applied, for example through a coarse spray nozzle, then the drift is reduced but the number of spray deposits per leaf is dramatically decreased, often resulting in loss of biological performance.

Therefore, there is a need to provide a solution that delivers a combination of more coarse spray droplets which exhibit low drift with formulations that deliver good canopy coverage on the target crop at low spray volumes.

### SUMMARY OF THE INVENTION

Considering the above it would be advantageous to have improved means for low volume spray application. The object of the present invention is solved with the subject matter of the independent claims, wherein further embodiments are incorporated in the dependent claims. It should be noted that the following described aspects and examples of the invention apply also for a vehicle configured to carry out the method for low volume spray application.

According to a first aspect, there is provided a method of spraying a field with a vehicle. The method comprises: moving a vehicle over a plant within a field and spraying the plant with a liquid spray. The liquid spray comprises at least one agrochemical active ingredient and at least one adjuvant. The at least one adjuvant is selected from the group comprising mono-and diesters of sulfosuccinate metal salts with branched or linear alcohols comprising 1-10 carbon atoms, organosilicone ethoxylates, ethoxylated diacetylene-diols with 1 to 6 EO, and alcohol ethoxylates. The liquid spray is sprayed at a liquid spray rate such that the volume of liquid spray to be sprayed per area is less than 60 litres per hectare. The liquid spray is sprayed with a hydraulic nozzle and/or an atomising disc wherein, when the liquid spray is sprayed with a hydraulic nozzle the hydraulic nozzle is configured to spray droplets having a Volume Median Diameter (VMD) of at least 170 microns, and wherein, when the liquid spray is sprayed with an atomising disc the atomising disc is configured to spray droplets having a VMD of at least 120 microns.

In other words, with the combination of the spraying of more coarse spray droplets and the presence of the indicated adjuvants in the liquid spray low drift and good plant canopy coverage for low volume spray applications can be achieved. The VMD value, also referred to as DV0.5, means that half of the volume of liquid spray is in droplets higher than this value and half is smaller.

In an example, the at least one adjuvant is selected from the group comprising sodium dioctylsulfosuccinate, polyalkyleneoxide modified heptamethyltrisiloxane, and ethoxylated diacetylene-diols with 1 to 6 EO.

In an example, the liquid spray is sprayed at a liquid spray rate such that the volume of liquid spray to be sprayed per area is less than 40 litres per hectare, preferably less than or equal to 25 L/ha.

In other words, the method relates primarily to low volume spray applications and ultra-low volume applications.

In an example, when the liquid spray is sprayed with the method with a hydraulic nozzle the hydraulic nozzle is configured to spray droplets having a Volume Median Diameter (VMD) of at least 200 microns and in particular of at least 240 microns.

In an example, when the liquid spray is sprayed with the method with an atomising disc the atomising disc is configured to spray droplets having a VMD of at least 135 microns and in particular of at least 150 microns.

In an example, when the liquid spray is sprayed with the method with a hydraulic nozzle the hydraulic nozzle is configured to spray droplets having a VMD that does not exceed 400 microns, in particular not exceed 375 microns and more particular not exceed 350 microns; and
wherein, when the liquid spray is sprayed with the method with an atomising disc the atomising disc is configured to spray droplets having a VMD that does not exceed 350 microns, in particular not exceed 325 microns and more particular not exceed 300 microns.

Thus, in a preferred embodiment there is an upper limit for the VMD because above a certain droplet size there is no payoff in terms of low drift and good canopy plant coverage anymore in the context of low spray volume application. In particular above a certain VMD limit spray coverage and efficacy may be reduced because there may not be enough droplets to adequately cover all treated plant surfaces in some applications.

In an example, when the liquid spray is sprayed with the method with a hydraulic nozzle the hydraulic nozzle is configured to spray droplets having a DV0.1 in the range of between 115 microns and 170 microns;
wherein, when the liquid spray is sprayed with the method with an atomising disc the atomising disc is configured to spray droplets having a DV0.1 in the range of between 80 microns and 120 microns.

Thus, in order to have low drift it is favorable to have more coarse liquid spray droplets. The DV0.1 value means that 10% of the volume of the liquid spray is in droplets smaller than this value.

In an example, wherein, when the liquid spray is sprayed with the method with a hydraulic nozzle the hydraulic nozzle is configured to spray droplets having a DV0.9 in the range of between 400 microns and 560 microns;
wherein, when the liquid spray is sprayed with the method with an atomising disc the atomising disc is configured to spray droplets having a DV0.9 in the range of between 230 microns and 520 microns.

Again, more coarse spray droplets lower the risk for drift. The DV0.9 value indicates that 90% of the volume of spray is in droplets smaller (or 10% larger) than this value.

In an example, wherein, when the liquid spray is sprayed with the method with a hydraulic nozzle the hydraulic nozzle is configured to spray droplets having a volume percentage of spray droplets below 150 microns in the range of between 59% to 70%;
wherein, when the liquid spray is sprayed with the method with an atomising disc the atomising disc is configured to spray droplets having a volume percentage of spray droplets below 150 microns in the range of between 13% to 48%.

In an example, when the liquid spray is sprayed with the method with a hydraulic nozzle the hydraulic nozzle is configured to spray droplets having a volume percentage of spray droplets below 100 microns in the range of between 2% to 7%;
wherein, when the liquid spray is sprayed with the method with an atomising disc the atomising disc is configured to spray droplets having a volume percentage of spray droplets below 100 microns in the range of between 5% to 20%.

The volume percentage of spray droplets below 150 (or below 100) microns value/s is/are drift parameter/s which indicate/s the availability of fine driftable droplets.

In an example, the concentration of the at least one adjuvant in the liquid spray is in the range of between 5 to 200 g/l, preferably from 10 to 150 g/l, and most preferred from 10 to 130 g/l.

In an example, the liquid spray is applied to plants with textured leaf surfaces.

In an example, the vehicle is an Unmanned Aerial Vehicle (UAV).

According to a second aspect, there is provided a vehicle configured to carry out the method as discussed under the first aspect. In an example, the vehicle is an UAV.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:

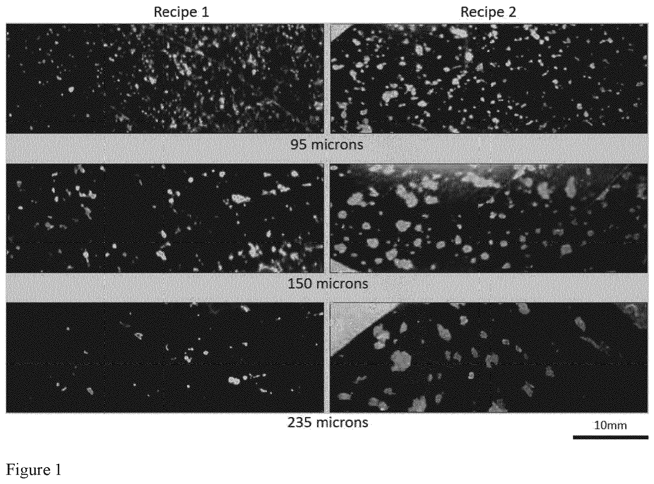

Fig. 1 shows a comparison of liquid spray deposits on soybean for a reference (conventional) liquid spray (recipe 1) and liquid spray according to the invention (recipe 2) as sprayed with the method of the invention.

### DETAILED DESCRIPTION OF EMBODIMENTS

The invention relates in a first embodiment to a method of spraying a field with a vehicle the method comprising: moving a vehicle over a plant within a field and spraying the plant with a liquid spray;
wherein, the liquid spray comprises at least one agrochemical active ingredient and at least one adjuvant;
wherein, the at least one adjuvant is selected from the group comprising mono-and diesters of sulfosuccinate metal salts with branched or linear alcohols comprising 1-10 carbon atoms, organosilicone ethoxylates, ethoxylated diacetylene-diols with 1 to 6 EO, and alcohol ethoxylates;
wherein, the liquid spray is sprayed at a liquid spray rate such that the volume of liquid spray to be sprayed per area is less than 60 litres per hectare;
wherein, the liquid spray is sprayed with a hydraulic nozzle and/or an atomising disc;
wherein, when the liquid spray is sprayed with a hydraulic nozzle the hydraulic nozzle is configured to spray droplets having a Volume Median Diameter (VMD) of at least 170 microns;
wherein, when the liquid spray is sprayed with an atomising disc the atomising disc is configured to spray droplets having a VMD of at least 120 microns.

In an example, the term "field" refers to an agricultural field where a plurality of plants are planted, grown and harvested.

In an example, the term "vehicle" refers to a tractor with a boom sprayer, an orchard sprayer, an Unmanned Ground Vehicle (UGV), an Unmanned Aerial Vehicle (UAV) including drones and single rotor unmanned helicopters, robotic devices, planes, helicopters, tractor with a boom sprayer fitted with pulse width modulation (PWM).

In an example, the atomizing disc is a spinning disc.

In an example, the term "plant" refers to a crop plant and/or a weed plant.

In an example the term "plant" refers to a plurality of plants on an agricultural field.

In an example, if the liquid spray comprises an agrochemical active ingredient which is a fungicide and/or insecticide the liquid spray is preferably applied to a crop plant.

In an example, if the liquid spray comprises an agrochemical active ingredient which is a herbicide the liquid spray is preferably applied to a weed plant

In an example, the at least one agrochemical active ingredient is a chemical and/or biological fungicide, insecticide, herbicide and/or safener.

In an example, the liquid spray comprises at least one agrochemical active ingredient and at least one adjuvant and may further comprise a solvent such as water.

In an example, the at least one adjuvant in the liquid spray is selected from the group of comprising mono-and diesters of sulfosuccinate metal salts with branched or linear alcohols comprising 1-10 carbon atoms, in particular alkali metal salts, more particular sodium salts, and most particular sodium dioctylsulfosuccinate; as well as organosilicone ethoxylates such as organomodified polysiloxanes/ trisiloxane alkoxylates with the following CAS No. 27306-78-1, 67674-67-3, 134180-76-0, e.g., Silwet^{®} L77, Silwet^{®} 408, Silwet^{®} 806, BreakThru^{®} S240, BreakThru^{®} S278.

Other suitable spreading agents are ethoxylated diacetylene-diols with 1 to 6 EO, e.g. Surfynol^{®} 420 and 440.

Other suitable spreading agents are alcohol ethoxylates, e.g. Break-Thru^{®} Vibrant,
Preferred are polyalkyleneoxide modified heptamethyltrisiloxane, more preferred are selected from the group comprising the siloxane groups Poly(oxy-1,2-ethanediyl), alpha.-methyl-.omega.-[3-[1,3,3,3-tetramethyl-1-[(trimethylsilyl)oxy]disiloxanyl]propoxy] (CAS No (27306-78-1), Poly(oxy-1,2-ethanediyl),.alpha.-[3-[1,3,3,3-tetramethyl-1-[(trimethylsilyl)oxy]disiloxanyl]propyl]-.omega.-hydroxy (Cas No 67674-67-3), and Oxirane, methyl-, polymer with oxirane, mono3-1,3,3,3-tetramethyl-1-(trimethylsilyl)oxydisiloxanylpropyl ether (Cas No 134180-76-0).

In an example, the liquid spray may comprise further formulation additives such as for example surfactants, rheological modifiers, antifoam substances, antifreeze substances, biocides, colourants, pH adjusters, buffers, stabilisers, antioxidants, inert filling materials, humectants, crystal growth inhibitors, micronutrients etc.

In an example, formulations that can be used as basis for the liquid spray of the method include SC, SE, EW, OD, WG, WP, EC, DC, ME, MC, and SL.

According to an example, the at least one adjuvant is selected from the group comprising sodium dioctylsulfosuccinate, polyalkyleneoxide modified heptamethyltrisiloxane, and ethoxylated diacetylene-diols with 1 to 6 EO.

In an example, the least one adjuvant is selected from the group comprising an adjuvant as disclosed in table I of the example section.

According to an example, the liquid spray is sprayed with the method at a liquid spray rate such that the volume of liquid spray to be sprayed per area is less than 40 litres per hectare, preferably less than or equal to 25 L/ha.

According to an example, when the liquid spray is sprayed with the method with a hydraulic nozzle the hydraulic nozzle is configured to spray droplets having a Volume Median Diameter (VMD) of at least 200 microns and in particular of at least 240 microns.

According to an example, when the liquid spray is sprayed with the method with an atomising disc the atomising disc is configured to spray droplets having a VMD of at least 135 microns and in particular of at least 150 microns.

It is noted that the term "atomised" or "atomising" does not mean individual atoms, but relates to the standard us of this term with respect to spray systems, meaning a fine mist of particles that can range in sizes.

In an example, the term "atomising disc" refers to a flat atomising disc but also includes cone shaped atomising discs.

According to an example, when the liquid spray is sprayed with the method with a hydraulic nozzle the hydraulic nozzle is configured to spray droplets having a VMD that does not exceed 400 microns, in particular not exceed 375 microns and more particular not exceed 350 microns; and
wherein, when the liquid spray is sprayed with the method with an atomising disc the atomising disc is configured to spray droplets having a VMD that does not exceed 350 microns, in particular not exceed 325 microns and more particular not exceed 300 microns.

According to an example, when the liquid spray is sprayed with the method with a hydraulic nozzle the hydraulic nozzle is configured to spray droplets having a DV0.1 in the range of between 115 microns and 170 microns;
wherein, when the liquid spray is sprayed with the method with an atomising disc the atomising disc is configured to spray droplets having a DV0.1 in the range of between 80 microns and 120 microns.

According to an example, when the liquid spray is sprayed with the method with a hydraulic nozzle the hydraulic nozzle is configured to spray droplets having a DV0.9 in the range of between 400 microns and 560 microns;
wherein, when the liquid spray is sprayed with the method with an atomising disc the atomising disc is configured to spray droplets having a DV0.9 in the range of between 230 microns and 520 microns.

According to an example, when the liquid spray is sprayed with the method with a hydraulic nozzle the hydraulic nozzle is configured to spray droplets having a volume percentage of spray droplets below 150 microns in the range of between 59% to 70%;
wherein, when the liquid spray is sprayed with the method with an atomising disc the atomising disc is configured to spray droplets having a volume percentage of spray droplets below 150 microns in the range of between 13% to 48%.

According to an example, when the liquid spray is sprayed with the method with a hydraulic nozzle the hydraulic nozzle is configured to spray droplets having a volume percentage of spray droplets below 100 microns in the range of between 2% to 7%;
wherein, when the liquid spray is sprayed with the method with an atomising disc the atomising disc is configured to spray droplets having a volume percentage of spray droplets below 100 microns in the range of between 5% to 20%.

According to an example, wherein, the concentration of the at least one adjuvant in the liquid spray is in the range of between 5 to 200 g/l, preferably from 10 to 150 g/l, and most preferred from 10 to 130 g/l.

According to an example, the liquid spray is applied to plants with textured leaf surfaces.

According to an example, the vehicle is an Unmanned Aerial Vehicle (UAV).

The invention relates in a second embodiment to a vehicle configured to carry out the method according to the first embodiment.

According to an example, the vehicle is an UAV.

It has to be noted that embodiments of the invention are described with reference to different subject matters. In particular, some embodiments are described with reference to method type claims whereas other embodiments are described with reference to the vehicle. However, a person skilled in the art will gather from the above and the following description that, unless otherwise notified, in addition to any combination of features belonging to one type of subject matter also any combination between features relating to different subject matters is considered to be disclosed with this application.

While the invention has been illustrated and described in detail in the description and example section, such illustration and description are to be considered illustrative or exemplary and not restrictive. The invention is not limited to the disclosed embodiments. Other variations to the disclosed embodiments can be understood and effected by those skilled in the art in practicing the invention according to the appended claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### EXAMPLES AND MATERIALS

**Table I shows preferred adjuvants used for the liquid spray of the invention.**

| **Product** | **Chemical name** | **Cas No.** | **Supplier** |
|---|---|---|---|
| Geropon^{®} DOS-PG | Dioctylsulfosuccinate sodium salt (65-70% in propylene glycol) | 577-11-7 | Rhodia |
| Synergen^{®} W 10 | Dioctylsulfosuccinate sodium salt (65-70% in propylene glycol) | 577-11-7 | Clariant |
| Aerosol^{®} OT 70 PG | Dioctylsulfosuccinate sodium salt (65-70% in propylene glycol) | 577-11-7 | Cytec |
| Lankropol^{®} KPH70 | Dioctylsulfosuccinate sodium salt (65-70% in propylene glycol) | 577-11-7 | Nouryon |
| Enviomet^{®} EM 5669 | Dioctylsulfosuccinate sodium salt (65-70% in propylene glycol) | 577-11-7 | Innospec |
| Surfynol^{®} S420 | 2,4,7,9-Tetramethyl-5-Decyne-4,7-Diol ethoxylate (1 mole) | 9014-85-1 | Evonik |
| Surfynol^{®} S440 | 2,4,7,9-Tetramethyl-5-Decyne-4,7-Diol ethoxylate (3.5 moles) | 9014-85-1 | Evonik |
| Surfynol^{®} S465 | 2,4,7,9-Tetramethyl-5-Decyne-4,7-Diol ethoxylate (10 moles) | 9014-85-1 | Evonik |
| Break-Thru^{®} Vibrant | 1-Hexanol, 3,5,5-trimethyl-, ethoxylated, propoxylated | 204336-40-3 | Evonik |
| Genapol^{®} EP 0244 | C10-12 alcohol alkoxylate (PO+EO) | | Clariant |
| Synergen^{®} W06 | C11 alcohol alkoxylate (PO+EO) | | Clariant |
| Genapol^{®} EP 2584 | C12-15 alcohol alkoxylate (PO+EO) | | Clariant |
| Agnique^{®} PG8107 | Oligomeric D-glucopyranose decyl octyl glycosides | 68515-73-1 | BASF |
| Silwet^{®} L77 | 3 -(2-methoxyethoxy)propylmethyl-bis(trimethylsilyloxy)silane | 27306-78-1 | Momentive |
| Silwet^{®} 408 | 2-[3-[[dimethyl(trimethylsilyloxy) silyl]oxy-methyl-trimethylsilyloxysilyl]propox y]ethanol | 67674-67-3 | Momentive |
| Silwet^{®} 806 | 3-[methyl-bis(trimethylsilyloxy)silyl]pr opan-1-ol;2-methyloxirane;oxirane | 134180-76-0 | Momentive |
| Break-thru^{®} S240 | 3-[methyl-bis(trimethylsilyloxy)silyl]pr opan-1-ol;2-methyloxirane;oxirane | 134180-76-0 | Evonik |
| Break-thru^{®} S278 | 3-(2-methoxyethoxy)propylmethyl-bis(trimethylsilyloxy)silane | 27306-78-1 | Evonik |
| Silwet^{®} HS 312 | Polyalkyleneoxide silane | | Momentive |
| Silwet^{®} HS 604 | Poly(oxy-1,2-ethanediyl), alpha-(3-(dimethyl(2-(trimethylsilyl)ethyl)silyl)pro pyl)-omega-methoxy- | 881689-05-0 | Momentive |
| BreakThru^{®} OE 444 | Siloxanes and Silicones, cetyl Me, di-Me | 191044-49-2 | Evonik |

### Example 1: UAV spray application with an atomizing disc (spinning disc):

The reference formulation (Recipe 1) and formulation illustrative of the invention (Recipe 2) as shown in table II below were sprayed with an XAG P20 UAV with spinning disc atomisers with droplet application sizes (VMD) selected at 95, 150 and 235 microns. The spray volume was 8 l/ha, the formulation rate was 0.5 1/ha and the flight height was 2 m. The spray liquid was sprayed to rice (results see table III) and soybean crop plants (results see table IV). A fluorescent tracer was added to the spray liquid to enable the deposits to be identified by UV fluorescence imaging. Leaf sections were placed on a horizontal board and imaged under UV illumination. The images were analysed for coverage and deposit size by ImageJ software (www.fiji.com).

**Table II: Recipes of SC products tested**

| Component g/l | **Recipe 1** | **Recipe 2** | |
|---|---|---|---|
| | **Reference** | **Illustrative of the invention** | |
| Tebuconazole | 150 | 150 | |
| Dispersants | 10 | 10 | |
| Geropon DOS-PG (dynamic wetter for retention) | 20 | 20 | Nb. Spreading only at higher levels |
| Silwet 806 | | 50 | |
| xanthan | 3.0 | 3.0 | |
| Propylene glycol | 80 | 80 | |
| Biocides | 2.3 | 2.3 | |
| pH buffers (to pH 7) | | 2.3 | |
| water | To vol | To vol | |

The SC (suspension concentrate) recipes 1 and 2 were prepared by standard SC methods of preparation. The tebuconazole was wet milled in a bead mill in a slurry of the other formulants excluding the xanthan, Silwet, Geropon DOS-PG and a portion of the water. The xanthan was prepared as a separate 2% gel and added to the slurry after milling along with the Silwet and Geropon DOS-PG with stirring.

The test results as shown below in table III and table IV demonstrate that the recipe illustrative of the invention (recipe 2) shows a higher leaf coverage when applied with small sized spray droplets, and when the spray droplet size is increased to 150 and 235 microns (VMD) Recipe 1 (reference) shows a reduction in coverage while Recipe 2 (invention) shows an increase in coverage. The same effect was observed with average deposit size. Images of deposits on soybean leaves are shown in figure 1.

**Table III: Coverage data for recipe 1 and recipe 2 applied to rice crop plants by UAV fitted with spinning disc atomisers.**

| Spray droplet size (VMD) microns | % leaf area covered reference product (Recipe 1) | % leaf area covered illustrative of the invention (Recipe 2) | Average deposit size reference product (Recipe 1) | Average deposit size illustrative of the invention (Recipe 2) |
|---|---|---|---|---|
| 95 | 4.4 | 5.0 | 0.034 mm | 0.069 mm |
| 150 | 1.2 | 9.8 | 0.083 mm | 0.21 mm |
| 235 | 1.2 | 9.8 | 0.091 mm | 0.42 mm |

**Table IV: Coverage data for recipe 1 and recipe 2 applied to soybean crop plants by UAV fitted with spinning disc atomisers.**

| Spray droplet size (VMD) microns | % leaf area covered reference product (Recipe 1) | % leaf area covered illustrative of the invention (Recipe 2) | Average deposit size reference product (Recipe 1) | Average deposit size illustrative of the invention (Recipe 2) |
|---|---|---|---|---|
| 95 | 6.4 | 11.6 | 0.056 mm | 0.18 mm |
| 150 | 4.0 | 16.3 | 0.12 mm | 0.30 mm |
| 235 | 1.4 | 16.3 | 0.089 mm | 1.11 mm |

For the XAG P20 UAV various droplet size parameters are known from table 3 of G. Wang et al. / Science of the Total Environment 737 (2020) 139793. This data has been used to complement the data as generated in example 1 and is shown in table V below. As indicated in the table, a change in the rotation speed (round per minute) of the spinning disc adjusts the VMD (and other droplet size parameters).

**Table V: Various droplet size parameters for an atomising disc**

| **XAG P20 Spinning Disc (rpm = rotation per minute)** | **DVD.1 (micron)** | **VMD (micron)** | **DV0.9 (micron)** | **Volume Percentage of Spray Droplets <150um (%)** | **Volume Percentage of Spray Droplets <100um (%)** | **Closest VMD as shown in table 3 of Wang et al. (micron)** | **VMD as used in Example 1 (micron)** |
|---|---|---|---|---|---|---|---|
| 2500rpm | 160,4 | 408,8 | 743 | 9,5 | 4,7 | | |
| 3000rpm | 111,7 | 290,6 | 512,2 | 17 | 7,7 | | |
| 4000rpm | 116,4 | 277,3 | 459,9 | 16,8 | 6,5 | | |
| 5000rpm | 102,5 | 219,6 | 332,8 | 25,6 | 9,8 | 219,6 | 235 |
| 8000rpm | 80,2 | 153,5 | 233 | 48,4 | 20,5 | 153,5 | 150 |
| 16000rpm | 62 | 96,2 | 137,8 | 94,9 | 55,1 | 96,2 | 95 |

Table VI indicates various droplet size parameters for different hydraulic nozzles. The VMD (and other droplet size parameters) are adjusted by changing the type of nozzle and by adjusting the liquid flow pressure. The American Society of Agricultural and Biological Engineers (ASABE) developed a droplet size classification system (ASABE S-572.1) that ranges from extremely fine to ultra coarse based upon DV values measured in microns. Nozzle selection and pressure can then be based on the nozzle manufacturer's droplet size category charts. Because of differences in the equipment and methods used to measure droplet sizes, different nozzle manufacturers may report different micron values for ASABE S-572.1 droplet size categories.

**Table VI: Various Droplet Size Parameters for Hydraulic Nozzles**

| **Type of H₃draulic Nozzle/ Flow Pressure applied (bar)** | **DV0.1 (micron)** | **VMD (micron)** | **DV0.9 (micron)** | **Volume Percentage of Spray Droplets <150um (%)** | **Volume Percentage of Spray Droplets <100um (%)** |
|---|---|---|---|---|---|
| TeeJet TP 11001 @ 4.5bar | 75,0 | 152,0 | 242,0 | 80,3 | 20,4 |
| TeeJet TP 11003 @ 3.0bar | 115,3 | 249,6 | 402,8 | 69,7 | 6,2 |
| TeeJet TP 11006 @ 2.0bar | 165,3 | 344,3 | 545,2 | 59,9 | 2,3 |
| TeeJet TP 8008 @ 2.2bar | 185,1 | 380,0 | 614,5 | 58,2 | 1,8 |
| TeeJet TP 6510 @ 1.2bar | 235,1 | 497,1 | 811,0 | 47,4 | 0,8 |
| TeeJet TP 6515 @ 1.0bar | 265,1 | 569,8 | 934,5 | 45,8 | 0,6 |

| | | | | | |
|---|---|---|---|---|---|
| (data can be determined by laser diffraction particle sizing) | | | | | |

## Claims

1. A method of spraying a field with a vehicle the method comprising:
moving a vehicle over a plant within a field and spraying the plant with a liquid spray;
wherein, the liquid spray comprises at least one agrochemical active ingredient and at least one adjuvant;
wherein, the at least one adjuvant is selected from the group comprising mono-and diesters of sulfosuccinate metal salts with branched or linear alcohols comprising 1-10 carbon atoms, organosilicone ethoxylates, and ethoxylated diacetylene-diols with 1 to 6 EO and alcohol ethoxylates;
wherein, the liquid spray is sprayed at a liquid spray rate such that the volume of liquid spray to be sprayed per area is less than 40 litres per hectare;
wherein, the liquid spray is sprayed with a hydraulic nozzle and/or an atomising disc;
wherein, when the liquid spray is sprayed with a hydraulic nozzle the hydraulic nozzle is configured to spray droplets having a Volume Median Diameter (VMD) of at least 170 microns;
wherein, when the liquid spray is sprayed with an atomising disc the atomising disc is configured to spray droplets having a VMD of at least 120 microns.

2. Method according to claim 1, wherein the at least one adjuvant is selected from the group comprising sodium dioctylsulfosuccinate, polyalkyleneoxide modified heptamethyltrisiloxane, and ethoxylated diacetylene-diols with 1 to 6 EO.

3. Method according to any one of the previous claims, wherein, the liquid spray is sprayed at a liquid spray rate such that the volume of liquid spray to be sprayed per area is less than or equal to 25 L/ha.

4. Method according to any one of the previous wherein, when the liquid spray is sprayed with a hydraulic nozzle the hydraulic nozzle is configured to spray droplets having a Volume Median Diameter (VMD) of at least 200 microns and in particular of at least 240 microns.

5. Method according to any one of claims 1 to 3, wherein, when the liquid spray is sprayed with an atomising disc the atomising disc is configured to spray droplets having a VMD of at least 135 microns and in particular of at least 150 microns.

6. Method according to any one of the previous claims, wherein, when the liquid spray is sprayed with a hydraulic nozzle the hydraulic nozzle is configured to spray droplets having a VMD that does not exceed 400 microns, in particular not exceed 375 microns and more particular not exceed 350 microns; and
wherein, when the liquid spray is sprayed with an atomising disc the atomising disc is configured to spray droplets having a VMD that does not exceed 350 microns, in particular not exceed 325 microns and more particular not exceed 300 microns.

7. Method according to any one of the previous claims, wherein, when the liquid spray is sprayed with a hydraulic nozzle the hydraulic nozzle is configured to spray droplets having a DV0.1 in the range of between 115 microns and 170 microns;
wherein, when the liquid spray is sprayed with an atomising disc the atomising disc is configured to spray droplets having a DV0.1 in the range of between 80 microns and 120 microns.

8. Method according to any one of the previous claims, wherein, when the liquid spray is sprayed with a hydraulic nozzle the hydraulic nozzle is configured to spray droplets having a DV0.9 in the range of between 400 microns and 560 microns;
wherein, when the liquid spray is sprayed with an atomising disc the atomising disc is configured to spray droplets having a DV0.9 in the range of between 230 microns and 520 microns.

9. Method according to any one of the previous claims, wherein, when the liquid spray is sprayed with a hydraulic nozzle the hydraulic nozzle is configured to spray droplets having a volume percentage of spray droplets below 150 microns in the range of between 59% to 70%;
wherein, when the liquid spray is sprayed with an atomising disc the atomising disc is configured to spray droplets having a volume percentage of spray droplets below 150 microns in the range of between 13% to 48%.

10. Method according to any one of the previous claims, wherein, when the liquid spray is sprayed with a hydraulic nozzle the hydraulic nozzle is configured to spray droplets having a volume percentage of spray droplets below 100 microns in the range of between 2% to 7%;
wherein, when the liquid spray is sprayed with an atomising disc the atomising disc is configured to spray droplets having a volume percentage of spray droplets below 100 microns in the range of between 5% to 20%.

11. Method according to any one of the previous claims, wherein, the concentration of the at least one adjuvant in the liquid spray is in the range of between 5 to 200 g/l, preferably from 10 to 150 g/l, and most preferred from 10 to 130 g/l.

12. Method according to any one of the previous claims, wherein the liquid spray is applied to plants with textured leaf surfaces.

13. Method according to any one of the previous claims, wherein, the vehicle is an Unmanned Aerial Vehicle (UAV).

14. A vehicle configured to carry out the method of any of claims 1-13.

15. A vehicle according to claim 14, wherein, the vehicle is an UAV.

## Patentansprüche

1. Verfahren zum Besprühen eines Felds mit einem Fahrzeug, wobei das Verfahren umfasst:
Bewegen eines Fahrzeugs über eine Pflanze in einem Feld und Besprühen der Pflanze mit einem Flüssigkeitsspray;
wobei das Flüssigkeitsspray wenigstens einen agrochemischen Wirkstoff und wenigstens einen Hilfsstoff umfasst;
wobei der wenigstens eine Hilfsstoff ausgewählt ist aus der Gruppe umfassend Mono- und Diester von Sulfosuccinat-Metallsalzen mit verzweigten oder linearen Alkoholen, die 1-10 Kohlenstoffatome umfassen, Organosiliconethoxylate und ethoxylierte Diacetylendiole mit 1 bis 6 EO, und Alkoholethoxylate;
wobei das Flüssigkeitsspray mit einer solchen Flüssigkeitssprührate versprüht wird, dass das Volumen des zu versprühenden Flüssigkeitssprays pro Fläche kleiner als 40 Liter pro Hektar ist;
wobei das Flüssigkeitsspray mit einer Hydraulikdüse und/oder einer Zerstäuberscheibe versprüht wird;
wobei, wenn das Flüssigkeitsspray mit einer Hydraulikdüse versprüht wird, die Hydraulikdüse dafür gestaltet ist, Tröpfchen mit einem volumenmedianen Durchmesser (VMD) von wenigstens 170 Mikrometer zu versprühen;
wobei, wenn das Flüssigkeitsspray mit einer Zerstäuberscheibe versprüht wird, die Zerstäuberscheibe dafür gestaltet ist, Tröpfchen mit einem VMD von wenigstens 120 Mikrometer zu versprühen.

2. Verfahren nach Anspruch 1, wobei der wenigstens eine Hilfsstoff ausgewählt ist aus der Gruppe umfassend Natriumdioctylsulfosuccinat, Polyalkylenoxidmodifiziertes Heptamethyltrisiloxan und ethoxylierte Diacetylendiole mit 1 bis 6 EO.

3. Verfahren nach einem der vorstehenden Ansprüche, wobei das Flüssigkeitsspray mit einer solchen Flüssigkeitssprührate versprüht wird, dass das Volumen des zu versprühenden Flüssigkeitssprays pro Fläche kleiner als oder gleich 25 1/ha ist.

4. Verfahren nach einem der vorstehenden Ansprüche, wobei, wenn das Flüssigkeitsspray mit einer Hydraulikdüse versprüht wird, die Hydraulikdüse dafür gestaltet ist, Tröpfchen mit einem volumenmedianen Durchmesser (VMD) von wenigstens 200 Mikrometer und insbesondere von wenigstens 240 Mikrometer zu versprühen.

5. Verfahren nach einem der Ansprüche 1 bis 3, wobei, wenn das Flüssigkeitsspray mit einer Zerstäuberscheibe versprüht wird, die Zerstäuberscheibe dafür gestaltet ist, Tröpfchen mit einem VMD von wenigstens 135 Mikrometer und insbesondere von wenigstens 150 Mikrometer zu versprühen.

6. Verfahren nach einem der vorstehenden Ansprüche, wobei, wenn das Flüssigkeitsspray mit einer Hydraulikdüse versprüht wird, die Hydraulikdüse dafür gestaltet ist, Tröpfchen mit einem VMD zu versprühen, der 400 Mikrometer nicht übersteigt, insbesondere 375 Mikrometer nicht übersteigt und insbesondere 350 Mikrometer nicht übersteigt; und
wobei, wenn das Flüssigkeitsspray mit einer Zerstäuberscheibe versprüht wird, die Zerstäuberscheibe dafür gestaltet ist, Tröpfchen mit einem VMD zu versprühen, der 350 Mikrometer nicht übersteigt, insbesondere 325 Mikrometer nicht übersteigt und insbesondere 300 Mikrometer nicht übersteigt.

7. Verfahren nach einem der vorstehenden Ansprüche, wobei, wenn das Flüssigkeitsspray mit einer Hydraulikdüse versprüht wird, die Hydraulikdüse dafür gestaltet ist, Tröpfchen mit einem DV0.1 in dem Bereich von zwischen 115 Mikrometer und 170 Mikrometer zu versprühen;
wobei, wenn das Flüssigkeitsspray mit einer Zerstäuberscheibe versprüht wird, die Zerstäuberscheibe dafür gestaltet ist, Tröpfchen mit einem DV0.1 in dem Bereich von zwischen 80 Mikrometer und 120 Mikrometer zu versprühen.

8. Verfahren nach einem der vorstehenden Ansprüche, wobei, wenn das Flüssigkeitsspray mit einer Hydraulikdüse versprüht wird, die Hydraulikdüse dafür gestaltet ist, Tröpfchen mit einem DV0.9 in dem Bereich von zwischen 400 Mikrometer und 560 Mikrometer zu versprühen;
wobei, wenn das Flüssigkeitsspray mit einer Zerstäuberscheibe versprüht wird, die Zerstäuberscheibe dafür gestaltet ist, Tröpfchen mit einem DV0.9 in dem Bereich von zwischen 230 Mikrometer und 520 Mikrometer zu versprühen.

9. Verfahren nach einem der vorstehenden Ansprüche, wobei, wenn das Flüssigkeitsspray mit einer Hydraulikdüse versprüht wird, die Hydraulikdüse dafür gestaltet ist, Tröpfchen mit einem Volumenprozentsatz an Spraytröpfchen unter 150 Mikrometer in dem Bereich von zwischen 59 % und 70 % zu versprühen;
wobei, wenn das Flüssigkeitsspray mit einer Zerstäubungsscheibe versprüht wird, die Zerstäubungsscheibe dafür gestaltet ist, Tröpfchen mit einem Volumenprozentsatz an Spraytröpfchen unter 150 Mikrometer in dem Bereich von zwischen 13 % und 48 % zu versprühen.

10. Verfahren nach einem der vorstehenden Ansprüche, wobei, wenn das Flüssigkeitsspray mit einer Hydraulikdüse versprüht wird, die Hydraulikdüse dafür gestaltet ist, Tröpfchen mit einem Volumenprozentsatz an Spraytröpfchen unter 100 Mikrometer in dem Bereich von zwischen 2 % und 7 % zu versprühen;
wobei, wenn das Flüssigkeitsspray mit einer Zerstäubungsscheibe versprüht wird, die Zerstäubungsscheibe dafür gestaltet ist, Tröpfchen mit einem Volumenprozentsatz an Spraytröpfchen unter 100 Mikrometer in dem Bereich von zwischen 5 % und 20 % zu versprühen.

11. Verfahren nach einem der vorstehenden Ansprüche, wobei die Konzentration des wenigstens einen Hilfsstoffs in dem Flüssigkeitsspray in dem Bereich von zwischen 5 und 200 g/l, vorzugsweise von 10 bis 150 g/l und höchst bevorzugt von 10 bis 130 g/l liegt.

12. Verfahren nach einem der vorstehenden Ansprüche, wobei das Flüssigkeitsspray auf Pflanzen mit texturierten Blattoberflächen aufgebracht wird.

13. Verfahren nach einem der vorstehenden Ansprüche, wobei das Fahrzeug ein unbemanntes Luftfahrzeug (UAV) ist.

14. Fahrzeug, dafür gestaltet , das Verfahren nach einem der Ansprüche 1-13 durchzuführen.

15. Fahrzeug nach Anspruch 14, wobei das Fahrzeug ein UAV ist.

## Revendications

1. Procédé de pulvérisation d'un champ avec un véhicule, le procédé comprenant :
le déplacement d'un véhicule au-dessus d'une plante dans un champ et la pulvérisation de la plante avec un aérosol liquide ;
dans lequel l'aérosol liquide comprend au moins un principe actif agrochimique et au moins un adjuvant ;
dans lequel l'au moins un adjuvant est choisi dans le groupe comprenant les mono- et diesters de sels métalliques de sulfosuccinate avec des alcools ramifiés ou linéaires comprenant 1-10 atomes de carbone, les éthoxylates d'organosilicium, et les diacétylène-diols éthoxylés avec 1 à 6 EO et les éthoxylates d'alcool ;
dans lequel l'aérosol liquide est pulvérisé à une vitesse de pulvérisation de liquide telle que le volume d'aérosol liquide à pulvériser par surface est inférieur à 40 litres par hectare ;
dans lequel l'aérosol liquide est pulvérisé avec une buse hydraulique et/ou un disque atomiseur ;
dans lequel, lorsque l'aérosol liquide est pulvérisé avec une buse hydraulique, la buse hydraulique est conçue pour pulvériser des gouttelettes ayant un diamètre volumique médian (VMD) d'au moins 170 micromètres ;
dans lequel, lorsque l'aérosol liquide est pulvérisé avec un disque atomiseur, le disque atomiseur est conçu pour pulvériser des gouttelettes ayant un VMD d'au moins 120 micromètres.

2. Procédé selon la revendication 1, dans lequel l'au moins un adjuvant est choisi dans le groupe comprenant le dioctylsulfosuccinate de sodium, l'heptaméthyltrisiloxane modifié par un oxyde de polyalkylène, et les diacétylène-diols éthoxylés avec 1 à 6 EO.

3. Procédé selon l'une quelconque des revendications précédentes, dans lequel l'aérosol liquide est pulvérisé à une vitesse de pulvérisation de liquide telle que le volume d'aérosol liquide à pulvériser par surface est inférieur ou égal à 25 L/ha.

4. Procédé selon l'une quelconque des revendications précédentes dans lequel, lorsque l'aérosol liquide est pulvérisé avec une buse hydraulique, la buse hydraulique est conçue pour pulvériser des gouttelettes ayant un diamètre volumique médian (VMD) d'au moins 200 micromètres et en particulier d'au moins 240 micromètres.

5. Procédé selon l'une quelconque des revendications 1 à 3 dans lequel, lorsque l'aérosol liquide est pulvérisé avec un disque atomiseur, le disque atomiseur est conçu pour pulvériser des gouttelettes ayant un VMD d'au moins 135 micromètres et en particulier d'au moins 150 micromètres.

6. Procédé selon l'une quelconque des revendications précédentes dans lequel, lorsque l'aérosol liquide est pulvérisé avec une buse hydraulique, la buse hydraulique est conçue pour pulvériser des gouttelettes ayant un VMD qui ne dépasse pas 400 micromètres, en particulier ne dépasse pas 375 micromètres, et plus particulièrement ne dépasse pas 350 micromètres ; et
dans lequel, lorsque l'aérosol liquide est pulvérisé avec un disque atomiseur, le disque atomiseur est conçu pour pulvériser des gouttelettes ayant un VMD qui ne dépasse pas 350 micromètres, en particulier ne dépasse pas 325 micromètres, et plus particulièrement ne dépasse pas 300 micromètres.

7. Procédé selon l'une quelconque des revendications précédentes dans lequel, lorsque l'aérosol liquide est pulvérisé avec une buse hydraulique, la buse hydraulique est conçue pour pulvériser des gouttelettes ayant un DV0,1 dans la plage comprise entre 115 micromètres et 170 micromètres ;
dans lequel, lorsque l'aérosol liquide est pulvérisé avec un disque atomiseur, le disque atomiseur est conçu pour pulvériser des gouttelettes ayant un DV0,1 dans la plage comprise entre 80 micromètres et 120 micromètres.

8. Procédé selon l'une quelconque des revendications précédentes dans lequel, lorsque l'aérosol liquide est pulvérisé avec une buse hydraulique, la buse hydraulique est conçue pour pulvériser des gouttelettes ayant un DV0,9 dans la plage comprise entre 400 micromètres et 560 micromètres ;
dans lequel, lorsque l'aérosol liquide est pulvérisé avec un disque atomiseur, le disque atomiseur est conçu pour pulvériser des gouttelettes ayant un DV0,9 dans la plage comprise entre 230 micromètres et 520 micromètres.

9. Procédé selon l'une quelconque des revendications précédentes dans lequel, lorsque l'aérosol liquide est pulvérisé avec une buse hydraulique, la buse hydraulique est conçue pour pulvériser des gouttelettes ayant un pourcentage volumique de gouttelettes d'aérosol de moins de 150 micromètres dans la plage comprise entre 59 % et 70 % ;
dans lequel, lorsque l'aérosol liquide est pulvérisé avec un disque atomiseur, le disque atomiseur est conçu pour pulvériser des gouttelettes ayant un pourcentage volumique de gouttelettes d'aérosol de moins de 150 micromètres dans la plage comprise entre 13 % et 48 %.

10. Procédé selon l'une quelconque des revendications précédentes dans lequel, lorsque l'aérosol liquide est pulvérisé avec une buse hydraulique, la buse hydraulique est conçue pour pulvériser des gouttelettes ayant un pourcentage volumique de gouttelettes d'aérosol de moins de 100 micromètres dans la plage comprise entre 2 % et 7 % ;
dans lequel, lorsque l'aérosol liquide est pulvérisé avec un disque atomiseur, le disque atomiseur est conçu pour pulvériser des gouttelettes ayant un pourcentage volumique de gouttelettes d'aérosol de moins de 100 micromètres dans la plage comprise entre 5 % et 20 %.

11. Procédé selon l'une quelconque des revendications précédentes, dans lequel la concentration de l'au moins un adjuvant dans l'aérosol liquide se situe dans la plage comprise entre 5 et 200 g/l, de préférence entre 10 et 150 g/l, et idéalement entre 10 et 130 g/l.

12. Procédé selon l'une quelconque des revendications précédentes, dans lequel l'aérosol liquide est appliqué à des plantes avec des surfaces de feuille texturées.

13. Procédé selon l'une quelconque des revendications précédentes, dans lequel le véhicule est un véhicule aérien sans pilote (UAV).

14. Véhicule conçu pour réaliser le procédé de l'une quelconque des revendications 1 à 13.

15. Véhicule selon la revendication 14, le véhicule étant un UAV.
